(19) Europäisches Patentamt
European Patent Office
Office européen des brevets

(11) **EP 2 505 706 A1**

(12) **EUROPÄISCHE PATENTANMELDUNG**

(43) Veröffentlichungstag:
03.10.2012 Patentblatt 2012/40

(51) Int Cl.:
*D04H 3/02* (2006.01)   *B29C 70/32* (2006.01)

(21) Anmeldenummer: 12001147.3

(22) Anmeldetag: 21.02.2012

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 02.03.2011 DE 102011012858

(71) Anmelder: Premium AEROTEC GmbH
86179 Augsburg (DE)

(72) Erfinder: Niefnecker, Dirk
86150 Augsburg (DE)

(74) Vertreter: Häußler, Henrik
EADS Deutschland GmbH
Dept. CTOIPOD
81663 München (DE)

(54) **Drapiervorrichtung**

(57) Es ist eine Drapiervorrichtung zum Drapieren von flächigen textilen Halbzeugen, welche einen Kegelstumpf zum Drapieren und einen Antrieb zum Antreiben des Kegelstumpfs aufweist. Die Drapiervorrichtung dient dem Verformen eines flächigen textilen Halbzeugs durch den Kegelstumpf, wenn der Kegelstumpf um seine Rotationsachse rotiert und das Halbzeug von der Drapiervorrichtung drapiert wird. Auf diese Weise ist eine Endlos- sowie eine Sequenzielle Drapierung möglich.

Fig. 3

EP 2 505 706 A1

**Beschreibung**

Gebiet der Erfindung

Die Erfindung betrifft die Herstellung von Bauteilen aus Faserverbundwerkstoffen. Insbesondere betrifft die Erfindung eine Drapiervorrichtung zum Drapieren von flächigen textilen Halbzeugen, einen Endeffektor mit einer Drapiervorrichtung zum Ablegen textiler Halbzeuge auf eine gekrümmte Oberfläche, sowie die Verwendung einer Drapiervorrichtung.

Technologischer Hintergrund

Drapierungen von flächigen textilen Halbzeugen, insbesondere im Flugzeugbau können durch eine dreidimensionale Umformung der Halbzeuge durchgeführt werden, indem die Halbzeuge beispielsweise auf die ebene Fläche eines Umformkörpers aufgebracht werden und dieser Umformkörper dann entsprechend geformt wird, um hierdurch die flächigen textilen Halbzeuge zu dehnen und/oder zu stauchen.

Ein solcher Prozess wird demnach einzeln für jedes Bauteil bzw. für jedes Werkzeug durchgeführt und die Automatisierung einer Vordrapierung ist nicht ohne weiteres möglich. Weiterhin kann es schwierig sein, die notwendigen Faserorientierungen auf diese Weise zu erreichen.

Zusammenfassung der Erfindung

Es ist eine Aufgabe der Erfindung, eine schnell durchzuführende und einfach handhabbare Drapierung von flächigen textilen Halbzeugen, wie Geweben oder Gelegen, durch Streckung bzw. Stauchung der Halbzeuge zu ermöglichen.

Es sind eine Drapiervorrichtung zum Drapieren von flächigen textilen Halbzeugen, ein Endeffektor mit einer derartigen Drapiervorrichtung zum Aufbringen von textilen Halbzeugen auf die Oberfläche eines gekrümmten Werkzeugs und die Verwendung einer Drapiervorrichtung zur Herstellung bzw. Durchführung eines Teilprozesses zur Herstellung eines Spants eines Luftfahrzeugs, einer Druckkalotte eines Luftfahrzeugs, einer Laderaumtür eines Luftfahrzeugs oder einer Rumpfschale eines Luftfahrzeugs gemäß den Merkmalen der unabhängigen Ansprüche angegeben. Auch kann die Drapiervorrichtung zur Herstellung von Hautschalen von Luftfahrzeugen, Türstrukturen von Luftfahrzeugen und Flügelstrukturen verwendet werden.

Weiterbildungen der Erfindung ergeben sich aus den Unteransprüchen und der folgenden Beschreibung.

Die im Folgenden beschriebenen Ausführungsformen und Ausführungsbeispiele betreffen gleichermaßen die Drapiervorrichtung, den Endeffektor und die Verwendungen. In anderen Worten lassen sich Merkmale, die im Folgenden beispielsweise Im Hinblick auf die Drapiervorrichtung beschrieben werden, auch in den Endeffektor implementieren, und umgekehrt.

Gemäß einem ersten Aspekt der Erfindung ist eine Drapiervorrichtung zum Drapieren von flächigen textilen Halbzeugen angegeben. Die Drapiervorrichtung weist einen ersten rotationssymmetrischen Körper, beispielsweise einen Kegel oder Kegelstumpf, mit einer ersten Rotationsachse (bei der es sich um die Symmetrieachse des Körpers handelt) und einen ersten Antrieb zum Rotieren des Körpers um die erste Rotationsachse auf. Die Drapiervorrichtung ist zum Verformen des flächigen textilen Halbzeugs durch den ersten rotationssymmetrischen Körper ausgeführt, wenn der erste rotationssymmetrische Körper (oder Kegelstumpf) um die erste Rotationsachse rotiert und das flächige textile Halbzeug von der Drapiervorrichtung drapiert wird.

An dieser Stelle sei darauf hingewiesen, dass, wenn oben oder im Folgenden von einem rotationssymmetrischen Körper gesprochen wird, darunter ein Kegel oder Kegelstumpf oder ein anderer rotationssymmetrischer Körper (z.B. ein Rotationsparaboloid oder ein ganzes oder halbes Rotationshyperboloid) zu verstehen sein kann, und umgekehrt. Maßgeblich ist lediglich, dass dieser Körper eine Mantelfläche aufweist, deren Abstand zur Rotationsachse dieses rotationssymmetrischen Körpers entlang des Weges von dem einen Ende des Körpers zu seinem entgegengesetzten Ende unterschiedlich ist, also beispielsweise kontinuierlich abnimmt oder zunimmt. Ob es sich hierbei nun um einen Kegelstumpf, einen Spitzkegel, ein Rotationsparaboloid, ein ganzes oder halbes Rotationshyperboloid oder einen anderen Rotationskörper handelt, hängt von der zu erzielenden Drapierung ab.

Der erste rotationssymmetrische Körper wird also durch den Antrieb rotiert und das textile Halbzeug wird von dem Kegelstumpf gedehnt, da es dem rotationssymmetrischen Körper zugeführt wird und dann durch den rotationssymmetrischen Körper umgelenkt wird.

In anderen Worten wird der Bogenlängenunterschied des rotationssymmetrischen Körpers ausgenutzt, aus welchem sich ein Weglängenunterschied der Wege ergibt, die unterschiedliche Bereiche des textilen Halbzeugs bei Umlenkung durch den rotationssymmetrischen Körper zurücklegen müssen. Es ist zu beachten, dass der erste Antrieb den ersten rotationssymmetrischen Körper zumindest indirekt in Rotation versetzt. Beispielsweise kann der erste Antrieb den ersten rotationssymmetrischen Körper direkt antreiben. Auch ist es möglich, dass dieser Antrieb einen anderen rotationssymmetrischen Körper, beispielsweise einen Zylinder antreibt, in welchem Falle der andere rotationssymmetrische Körper seine Rotation auf den ersten rotationssymmetrischen Körper überträgt.

Dies kann beispielsweise **dadurch geschehen, dass** sich die Mantelflächen der beiden Zylinder berühren oder dass der Zylinder keilriemenartig mit dem ersten rotationssymmetrischen Körper verbunden ist.

Gemäß einem weiteren Aspekt der Erfindung ist ein Endeffektor angegeben, der eine oben und im Folgenden beschriebene Drapiervorrichtung aufweist.

Gemäß einem weiteren Aspekt der Erfindung ist die Verwendung einer oben und im Folgenden beschriebenen Drapiervorrichtung zur Herstellung eines Spants eines Luftfahrzeugs, einer Druckkalotte eines Luftfahrzeugs, einer Laderaumtür eines Luftfahrzeugs oder einer Rumpfschale eines Luftfahrzeugs angegeben.

Mit Hilfe der Drapiervorrichtung ist die automatisierte Drapierung von flächigen textilen Halbzeugen durch Streckung bzw. Stauchung der Halbzeuge in der Ebene möglich. Dieser Prozess kann endlos oder sequenziell erfolgen. Somit ist eine Vordrapierung von Gelegen zur Spantherstellung ermöglicht. Weiterhin ist es möglich, durch den Endeffektor ein Endlosablegen von Gelegen und/oder Geweben die bei dreidimensional geformten Oberflächen der Werkzeuge oder Werkstücke erforderliche Drapierung der Halbzeuge zu ermöglichen.

Unter dem Begriff "drapieren" ist hierbei das Aufbringen von flächigen Halbzeugen auf gekrümmte Oberflächen zu verstehen. Zum Anpassen an die Kontur müssen die Halbzeuge gestreckt und verzogen werden. Je nach Bindungs- und Vernähungsart der Gewebe und Gelege ändert sich deren Drapierbarkeit. Mit Hilfe der Drapiervorrichtung können Faserverbundwerkstoffe und sog. Prepregs verarbeitet und daraus Faserverbundbauteile beispielsweise für Fahrzeuge und insbesondere für Luftfahrzeuge hergestellt werden.

Gemäß einer Ausführungsform der Erfindung weist die Drapiervorrichtung weiterhin einen ersten Zylinder mit einer zweiten Rotationsachse (Symmetrieachse des Zylinders) auf, wobei die zweite Rotationsachse parallel zu der ersten Rotationsachse des ersten rotationssymmetrischen Körpers angeordnet sein kann. Dies ist aber nicht zwingend erforderlich. Das flächige textile Halbzeug wird hierbei durch Rotation des ersten Zylinders um die zweite Rotationsachse und die Rotation des ersten rotationssymmetrischen Körpers um die erste Rotationsachse transportiert und vordrapiert, also gedehnt und/oder gestaucht.

Gemäß einer weiteren Ausführungsform der Erfindung weist die Drapiervorrichtung eine elastische, umlaufende Membran auf, die auf den ersten Zylinder und den ersten rotationssymmetrischen Körper aufgespannt ist und zum Fixieren des Halbzeugs bei dessen Transport durch die Drapiervorrichtung dient.

Beispielsweise ist es aber auch möglich, dass das Halbzeug nicht durch die Membran an sich an der Drapiervorrichtung fixiert wird. Beispielsweise ist es möglich, dass der erste Zylinder und/oder der erste rotationssymmetrische Körper auf ihrer Mantelfläche Luftlöcher aufweisen, durch welche das flächige textile Halbzeug auf der Mantelfläche angesaugt werden kann. Hierfür können entsprechende Pumpvorrichtungen vorgesehen sein, die innerhalb des Zylinders bzw. des Kegelstumpfs einen Unterdruck erzeugen. Beispielsweise ist es auch möglich (alternativ oder zusätzlich), dass die Membran Luftlöcher aufweist und sich auf der Innenseite der Membran eine Saugvorrichtung befindet.

Gemäß einer weiteren Ausführungsform der Erfindung weist die Drapiervorrichtung einen zweiten rotationssymmetrischen Körper mit einer entsprechenden Rotationsachse und einen zweiten Zylinder mit einer entsprechenden Rotationsachse auf. Der zweite rotationssymmetrische Körper (bei dem es sich auch um einen weiteren, dritten Zylinder handeln kann) besitzt eine Mantelfläche, die an die Mantelfläche des ersten rotationssymmetrischen Körpers angelegt ist. In anderen Worten sind die beiden rotationssymmetrischen Körper direkt nebeneinander angeordnet, so dass sie das textile Halbzeug zwischen sich einquetschen.

Weiterhin berühren die Mantelflächen des ersten Zylinders und des zweiten Zylinders einander und die beiden Zylinder sind parallel zueinander angeordnet, so dass auch sie das textile Halbzeug bei seinem Transport durch die Drapiervorrichtung einquetschen und somit fixieren.

Durch die Nutzung des Bogenlängenunterschieds des ersten rotationssymmetrischen Körper und dem sich daraus ergebenden Weglängenunterschied der zwischen dem ersten rotationssymmetrischen Körper und dem ersten Zylinder gespannten Membran kann eine Streckung bzw. Stauchung der zwischen der Membran und einer entsprechenden Membran, die um den zweiten rotationssymmetrischen Körper und den zweiten Zylinder herumläuft, laufenden flächigen textilen Halbzeugen erfolgen.

Gemäß einer weiteren Ausführungsform der Erfindung ist der erste rotationssymmetrische Körper zum Ansaugen des Halbzeugs bei dem Transport durch die Drapiervorrichtung ausgeführt. Hierfür weist er beispielsweise entsprechende Ansaugdüsen auf seiner Mantelfläche auf.

Gemäß einer weiteren Ausführungsform der Erfindung weist der erste rotationssymmetrische Körper einen ersten Endradius an seinem ersten Ende und einen zweiten, größeren Endradius an seinem zweiten Ende auf, wobei der erste rotationssymmetrische Körper zum Einstellen des ersten und/oder des zweiten Endradius ausgeführt ist.

In anderen Worten kann der Öffnungswinkel des rotationssymmetrischen Körpers eingestellt werden, je nach Anforderung an die Drapierung des Halbzeugs.

Dieser Prozess kann gemäß einer weiteren Ausführungsform der Erfindung vollautomatisch durchgeführt werden.

Gemäß einer weiteren Ausführungsform der Erfindung ist der Endeffektor an einem Roboter oder einer Portalanlage zum automatisierten Aufbringen des flächigen textilen Halbzeugs auf die gekrümmte Oberfläche angebracht.

Gemäß einer weiteren Ausführungsform der Erfindung ist die Drapiervorrichtung als Roboterkopf des Roboters ausgeführt.

Gemäß einer weiteren Ausführungsform der Erfindung ist der Endeffektor zur Herstellung eines Spants eines Fahrzeugs, insbesondere eines Luftfahrzeugs, einer Druckkalotte eines Luftfahrzeugs, einer Laderaumtür eines Fahrzeugs, insbesondere eines Luftfahrzeugs, oder einer Rumpfschale eines Luftfahrzeugs ausgeführt.

Im Folgenden werden mit Verweis auf die Figuren Ausführungsbeispiele der Erfindung beschrieben.

Kurze Beschreibung der Figuren

Fig. 1 zeigt einen Kegel einer Drapiervorrichtung gemäß einem Ausführungsbeispiel der Erfindung.

Fig. 2 zeigt eine Drapiervorrichtung gemäß einem Ausführungsbeispiel der Erfindung.

Fig. 3 zeigt eine Drapiervorrichtung gemäß einem weiteren Ausführungsbeispiel der Erfindung.

Fig. 4 zeigt einen Endeffektor gemäß einem Ausführungsbeispiel der Erfindung.

Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

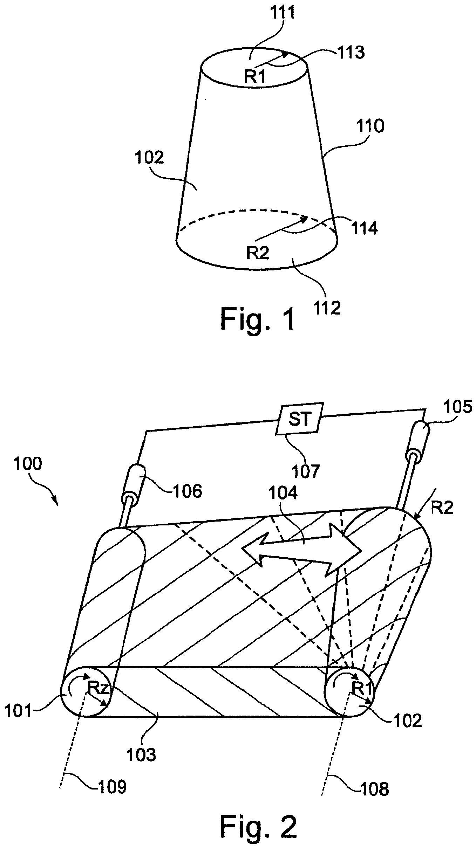

Fig. 1 zeigt einen rotationssymmetrischen Körper in Form eines Kegelstumpfs 102 einer Drapiervorrichtung gemäß einem Ausführungsbeispiel der Erfindung. Der Kegelstumpf 102 weist eine Grundfläche 112 mit einem größeren Radius 114, eine Mantelfläche 110 und eine Deckfläche 111 mit einem kleineren Radius 113 auf.

Das Prinzip der Erfindung baut sich auf dem Bogenlängenunterschied der Deck-und der Grundfläche des Kegelstumpfes 102 auf.

Der Bogenlängenunterschied, der sich aus den Radien 113 (R1) und 114 (R2) ergibt

$$(\Delta b = 2\pi \times R2 - 2\pi \times R1),$$

nimmt linear über die gesamte Mantelfläche zu.

Fig. 2 zeigt eine Drapiervorrichtung 100 gemäß einem Ausführungsbeispiel. Die Drapiervorrichtung weist einen ersten zylinderförmigen Körper 101 und einen ersten Kegelstumpf 102 auf, deren Rotationsachsen 109, 108 parallel zueinander ausgerichtet sind. Um diese beiden Körper 101, 102 ist eine elastische Membran 103 gelegt, die um die beiden Körper 101, 102 umlaufen kann.

Wenn die elastische Membran 103 über den zylinderförmigen Körper 101 und den Kegelstumpf 102 gespannt wird und diese Anordnung so aufgebaut ist, dass der Zylinder 101 und der Kegelstumpf 102 angetrieben werden können, wird bei der Bewegung der Anordnung die Membran im Bereich 104 (indem sie auf den Kegelstumpf 102 zuläuft) permanent gestreckt (Voraussetzung hierfür ist, dass R2 > Rz (Radius des Zylinders 101)) oder permanent gestaucht (Voraussetzung R2 < Rz, nicht abgebildet).

Auf der Unterseite der Anordnung tritt dieser Effekt umgekehrt auf (Stauchung bei R2 > Rz und Dehnung bei R2 < Rz).

Der Zylinder 101 und/oder der Kegelstumpf 102 werden jeweils durch einen entsprechenden Motor 106, 105 angetrieben und rotiert. Die beiden Antriebe 106, 105 können über eine gemeinsame Steuerung 107 gesteuert werden.

Weiterhin kann der Kegelstumpf 102 so ausgeführt sein, dass sich sein Öffnungswinkel kontinuierlich verändern lässt, beispielsweise indem der Radius R2 vergrößert oder verkleinert wird und/oder indem der Radius R1 vergrößert oder verkleinert wird. Bei dieser flexiblen Gestaltung der Radien R1 und/oder R2 auf mechanischem Wege besteht die Möglichkeit, die Stauchungen und Dehnungen der Membran während des Prozesses den Bedürfnissen anzupassen.

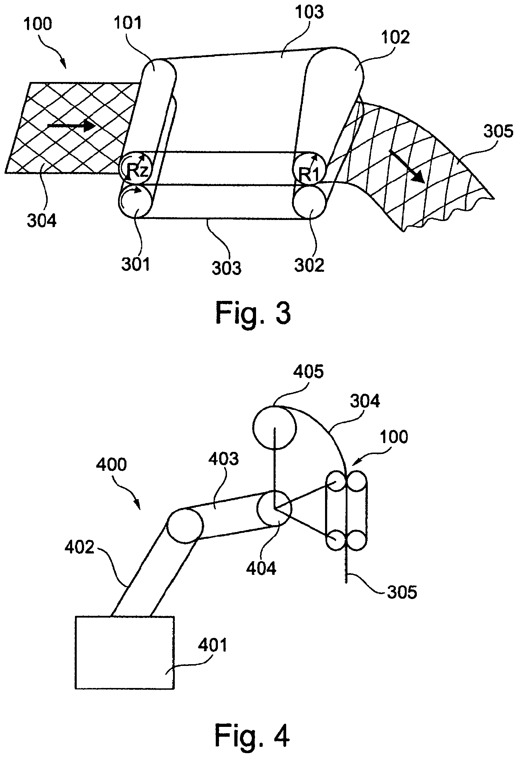

Fig. 3 zeigt eine Drapiervorrichtung 100 gemäß einem weiteren Ausführungsbeispiel der Erfindung. Die Drapiervorrichtung 100 weist in diesem Ausführungsbeispiel jeweils zwei, parallel zueinander angeordnete Zylinder 101, 301 auf, deren Mantelflächen sich berühren, und die gegenläufig rotieren.

Am anderen Ende der Draplervorrichtung sind zwei benachbart angeordnete Kegelstümpfe 102, 302 bzw. ein Kegelstumpf 102 und ein Zylinder 302 angeordnet, deren Mantelflächen sich ebenfalls berühren, und die gegenläufig rotieren. Zwischen den beiden Zylindern 101, 301 und zwischen den beiden Kegelstümpfen 102, 302 ist das Halbzeug 304, 305 eingequetscht, so dass es durch die Rotation der Zylinder und Kegelstümpfe transportiert wird.

Das flächige textile Halbzeug 304, 305 ist in der Membran 103, die den oberen Zylinder 101 und den oberen Kegelstumpf 102 umläuft, und der unteren Membran 303, die den unteren Zylinder 301 und den unteren Kegelstumpf 302 umläuft, fixiert, z. B. durch eine Verpressung.

Nun wird das Halbzeug im Rahmen der möglichen Drapierbarkeit des Halbzeugs entsprechend der Dehnung bzw. Stauchung der Membranen verformt. Die Art der Dehnung bzw. Stauchung wird über die Radien Rz, R1 und R2 des Zylinders 101 und des Kegelstumpfes 102 bestimmt. Sind die Radien R1 und R2 während des Prozesses frei einstellbar, ist es möglich, die Drapierung des Halbzeugs 304, 305 in einem kontinuierlichen Prozess den Anforderungen der Bauteilerstellung anzupassen.

Fig. 4 zeigt einen Endeffektor 400 in Form eines Roboters. Der Endeffektor 400 weist eine Basis 401 auf, an die sich ein erstes Segment 402 eines Roboterarms anschließt. An das erste Segment 402 ist ein zweites Segment 403 angebracht, an dessen Ende 404 eine Drapiervorrichtung 100 angebracht ist. Diese Drapiervorrichtung 100 wird über eine Rolle 405 mit dem flächigen textilen Halbzeug 304 versorgt.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

**Patentansprüche**

1. Drapiervorrichtung zum Drapieren von flächigen textilen Halbzeugen (304, 305), die Drapiervorrichtung aufweisend:

   einen ersten rotationssymmetrischen Körper (102) mit einer ersten Rotationsachse (108) und einem sich entlang der Rotationsachse ändernden Umfang;
   einen ersten Antrieb (105) zum Rotieren des ersten Körper (102) um die erste Rotationsachse (108);
   wobei die Drapiervorrichtung (100) zum Verformen des flächigen textilen Halbzeugs (304, 305) durch den ersten Körper (102) ausgeführt ist, wenn der erste Körper um die erste Rotationsachse (108) rotiert und das flächige textile Halbzeug (304, 305) von der Drapiervorrichtung (100) drapiert wird.

2. Drapiervorrichtung nach Anspruch 1, weiterhin aufweisend:

   einen ersten Zylinder (101) mit einer zweiten Rotationsachse (109);
   wobei die zweite Rotationsachse (109) parallel zu der ersten Rotationsachse (108) angeordnet ist;
   wobei das flächige textile Halbzeug (304, 305) durch Rotation des ersten Zylinders (101) um die zweite Rotationsachse (109) und Rotation des ersten Körpers (102) um die erste Rotationsachse (108) transportiert und vordrapiert wird.

3. Drapiervorrichtung nach Anspruch 2, weiterhin aufweisend:

   eine elastische, umlaufende Membran (103), welche auf den ersten Zylinder (101) und den ersten Körper (102) aufgespannt ist und zum Fixieren des Halbzeugs (304, 305) bei dessen Transport durch die Drapiervorrichtung (100) dient.

4. Drapiervorrichtung nach einem der Ansprüche 2 oder 3, weiterhin aufweisend:

   einen zweiten rotationssymmetrischen Körper (302) mit einer dritten Rotationsachse;
   einen zweiten Zylinder (301) mit einer vierten Rotationsachse;
   wobei der erste Körper und der zweite Körper aneinander angrenzend angeordnet sind, so dass sich die Mantelflächen der beiden Körper berühren; und
   wobei der erste Zylinder und der zweite Zylinder aneinander angrenzend angeordnet sind, so dass sich die Mantelflächen der beiden Zylinder berühren.

5. Drapiervorrichtung nach einem der vorhergehenden Ansprüche,
   wobei der erste Körper (102) oder die Membran (103) ausgeführt ist zum Ansaugen des Halbzeugs (304, 305) bei dessen Transport durch die Drapiervorrichtung (100).

6. Drapiervorrichtung nach einem der vorhergehenden Ansprüche,
   wobei der erste Körper (102) einen ersten Endradius (113) an einem ersten Ende und einen zweiten, größeren Endradius (112) an einem zweiten Ende aufweist;
   wobei der erste Körper (102) zum Einstellen des ersten und/oder des zweiten Endradius ausgeführt ist.

7. Drapiervorrichtung nach einem der vorhergehenden Ansprüche,
   wobei der erste Körper (102) ein Kegel oder ein Kegelstumpf ist.

8. Endeffektor (400) mit einer Drapiervorrichtung (100) nach einem der vorhergehenden Ansprüche.

9. Endeffektor (400) nach Anspruch 8,
   ausgeführt als Funktionseinheit eines Roboters zum automatisierten Aufbringen des flächigen textilen Halbzeugs (103) auf eine gekrümmte Oberfläche.

10. Endeffektor (400) nach Anspruch 8 oder 9,

ausgeführt zur Herstellung eines Spants eines Luftfahrzeugs, einer Druckkalotte eines Luftfahrzeugs, einer Laderaumtür eines Luftfahrzeugs oder einer Rumpfschale eines Luftfahrzeugs.

11. Verwendung einer Drapiervorrichtung nach einem der Ansprüche 1 bis 7 zur Herstellung eines Spants eines Luftfahrzeugs, einer Druckkalotte eines Luftfahrzeugs, einer Laderaumtür eines Luftfahrzeugs, einer Rumpfschale eines Luftfahrzeugs, von Hautschalen von Luftfahrzeugen, Türstrukturen von Luftfahrzeugen und Flügelstrukturen.

Fig. 1

Fig. 2

Fig. 3

Fig. 4

**Europäisches Patentamt**
**European Patent Office**
**Office européen des brevets**

## EUROPÄISCHER RECHERCHENBERICHT

Nummer der Anmeldung

EP 12 00 1147

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2010/252179 A1 (SCHOPPMEIER JAN [DE] ET AL) 7. Oktober 2010 (2010-10-07) * Absätze [0008] - [0010], [0027], [0028] * ----- | 1-7,10 | INV. D04H3/02 B29C70/32 |
| Y | US 3 127 167 A (RABINOV ET AL.) 31. März 1964 (1964-03-31) * Spalte 5, Zeile 74 - Spalte 6, Zeile 70 * ----- | 1-7,10 | |
| X | EP 1 992 456 A2 (KUKA SYSTEMS GMBH [DE]) 19. November 2008 (2008-11-19) * Absätze [0010], [0034] * ----- | 8-10 | |

RECHERCHIERTE SACHGEBIETE (IPC)

D04H
B29C
B65H

Der vorliegende Recherchenbericht wurde für alle Patentansprüche erstellt

| Recherchenort | Abschlußdatum der Recherche | Prüfer |
|---|---|---|
| Den Haag | 28. August 2012 | Van Beurden-Hopkins |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

**EP 2 505 706 A1**

**ANHANG ZUM EUROPÄISCHEN RECHERCHENBERICHT
ÜBER DIE EUROPÄISCHE PATENTANMELDUNG NR.**

EP 12 00 1147

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-08-2012

| Im Recherchenbericht angeführtes Patentdokument | Datum der Veröffentlichung | Mitglied(er) der Patentfamilie | Datum der Veröffentlichung |
|---|---|---|---|
| US 2010252179 A1 | 07-10-2010 | DE 102008051121 A1<br>US 2010252179 A1 | 15-04-2010<br>07-10-2010 |
| US 3127167 A | 31-03-1964 | KEINE | |
| EP 1992456 A2 | 19-11-2008 | DE 202007006528 U1<br>EP 1992456 A2 | 18-09-2008<br>19-11-2008 |

EPO FORM P0461

Für nähere Einzelheiten zu diesem Anhang : siehe Amtsblatt des Europäischen Patentamts, Nr.12/82

10